# EUROPEAN PATENT APPLICATION

(11) **EP 0 530 083 A1**
(43) Date of publication of application: **03.03.1993**
(21) Application number: 92402316.1
(22) Date of filing: 20.08.1992
(51) Int. Cl.: G01N 22/00, G02B 6/44, C03C 25/02

(54) **Carbon coated optical fiber, a production method and a carbon coating evaluation method thereof**

(30) Priority: 23.08.1991 JP 237142/91; 25.06.1992 JP 167967/92
(71) Applicant: FUJIKURA LTD., Kohtoh-ku Tokyo (JP)
(72) Inventor: Shimomichi, Tsuyoshi, Sakura-shi, Chiba-ken (JP); Oohashi, Keiji, Sakura-shi, Chiba-ken (JP); Araki, Shinji, Sakura-shi, Chiba-ken (JP)
(74) Representative: Fort, Jacques

(57) **Abstract**

A carbon coating evaluation method characterized in that, in a method wherein a carbon coated optical fiber is irradiated with microwaves and the quality of the carbon coating is evaluated from the variation in the reflection characteristics of these microwaves, the diameter of the optical fiber passage aperture formed in a wave guide is set within the limits of 4 to 8 mm, the frequency of the microwave is set within the limits of 7 to 15 GHz, and the distance between the carbon coated optical fiber and the end of the wave guide upon which the microwaves radiate is fixed below 5 mm. A carbon coated optical fiber manufacturing method utilizing the aforementioned carbon coating evaluation method. A carbon coated optical fiber having a carbon coating for which the variation in the reflection loss of the microwaves is 0.75 dB/m or more. Because, the reliability of the evaluation results for the coating quality of the carbon coating are high for the carbon coating evaluation method of the present invention, the hydrogen resistance of a carbon coated optical fiber manufactured utilizing this method are also highly reliable. The present invention therefore provides a carbon coated optical fiber having a highly superior resistance to hydrogen.

## Description

### Field of the Invention

The present invention relates to a carbon coated optical fiber formed by applying a carbon coating to the surface of an optical fiber, and to a manufacturing method and carbon coating evaluation method for the same.

When silica optical fibers come into contact with hydrogen, the absorption loss arising from the molecular vibration of hydrogen molecules diffused within the fiber is considerable. Moreover, because P₂O5, GeO₂, B₂O₃ and the like, which are present as dopants, react with hydrogen forming hydroxide groups which are taken up within the fiber glass, a loss in the transmission ability of the fiber is incurred due to the absorption of these hydroxide groups, presenting a serious difficulty.

In order to solve the aforementioned problems, it was recently revealed that the hydrogen resistance of an optical fiber may be improved utilizing a chemical vapor deposition method (hereinafter referred to as CVD), wherein a carbon coated optical fiber is produced by forming a carbon coating about the surface of an optical fiber within a CVD reaction furnace.

However, the hydrogen resistance of the carbon coating formed about the surface of the carbon coated optical fiber can vary greatly depending upon the quality of the coating. For this reason, the coating quality of the carbon coating is evaluated and the results of this evaluation are relayed to the CVD reaction furnace as a control signal. The reaction conditions within the CVD reaction furnace are, for example, changed with regulation being carried out so that a carbon coating demonstrating a fixed hydrogen resistance is formed.

Within the conventional art, a method relying on lasers is disclosed in U. S. Patent No.4,952,226 as a method of evaluating the coating quality of a carbon coating.

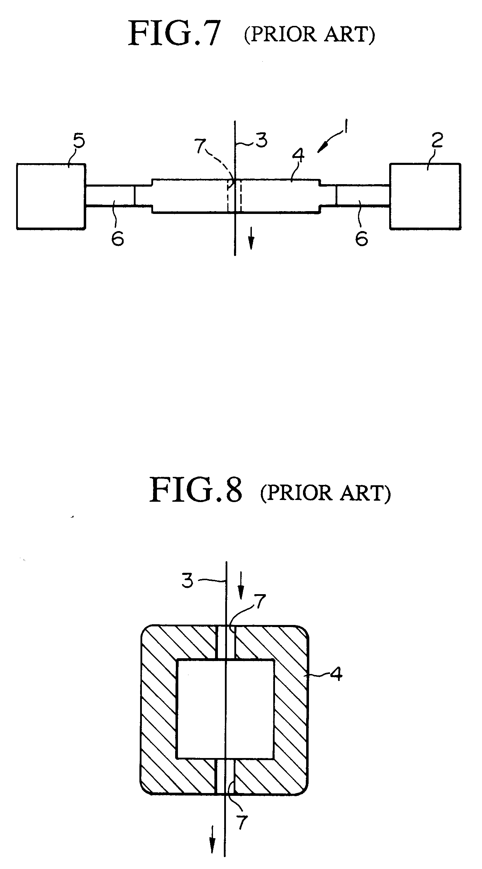

Moreover, a method which relies on microwaves to evaluate the coating quality of the carbon coating of a carbon coated optical fiber was purposed by the inventors of the present invention (see Japanese Patent Application, First Publication No. Hei 3-37140). This evaluation method is carried out utilizing an evaluation device such as the type shown in Fig. 7. Evaluation device 1 is provided in the lower part of a CVD reaction furnace (not represented in the figures) which forms the carbon coating about the surface of the optical fiber, and comprises an oscillating device 2, which oscillates the microwaves, a wave guide 4, which guides the microwaves and irradiates the carbon coated optical fiber 3 with the microwaves, a detecting device 5, which detects the variation in the transmission and reflection of the microwaves, and with coaxial cables 6,6, which connect oscillating device 2 and detecting device 5 via connection to either end of wave guide 4. Fig. 8 is a vertical cross sectional view of the direction in which the microwaves are guided within the wave guide 4 shown in Fig. 7. Optical fiber insertion aperture 7 for guiding carbon coated optical fiber 3 through wave guide 4 is provided in wave guide 4.

Utilizing this type of evaluation device, the absorption of microwaves by the carbon coating is used in order to evaluate the coating quality of the carbon coating about the surface of carbon coated optical fiber 3. Carbon coated optical fiber 3 is guided through wave guide 4 via optical fiber insertion aperture 7. Microwaves are reflected at carbon coated optical fiber 3 in wave guide 4 and the variation in the transmission and refraction of these microwaves is detected at detecting device 5; as a result, the coating character of the carbon coating is evaluated.

However, in this evaluation method, the optimization of the evaluation standards is not sufficient. The signal indicating the characteristic value of the loss in transmission or loss in reflection of the microwaves, this being indicative of the coating quality of the carbon coating, tends to become identical to noise, and is dissatisfactory with respect to the reliability of the method. Moreover, for this reason, even the carbon coated optical fiber 3 manufactured using this evaluation method is dissatisfactory with respect to the reliability of its resistance to hydrogen.

### Summary of the Invention

It is an object of the present invention to provide a method for evaluating a carbon coating in which the reliability of the evaluation results for the coating quality of the carbon coating are improved by optimizing such evaluation conditions as the frequency of the microwaves, the diameter of the optical fiber passage aperture and the optimal limits for the distance between the carbon coated optical fiber and the end of the wave guide upon which the microwaves from the wave guide radiate, in a method for evaluating the coating quality of a carbon coating from the variation in the reflection characteristics of the microwaves with which the carbon coated optical fiber has been irradiated.

Moreover, this invention has as an additional objective the provision of a manufacturing method for carbon coated optical fibers which excel in their resistance to hydrogen through the utilization of a method wherein the coating quality of the carbon coating is evaluated from the variation in the reflection characteristics of the microwaves with which the carbon coated optical fiber has been irradiated.

Furthermore, this invention has as yet another objective the provision of a carbon coated optical fiber having a markedly superior resistance to hydrogen.

In the carbon coating evaluation method of the present invention, an aperture for passage of the optical fiber is formed in the wave guide. The wave guide passage aperture has a diameter within the range of 4 to 8 mm while the frequency of the microwaves is within the range of 7 to 15 GHz. Because the method of the present invention is carried out under optimized conditions wherein the distance between the carbon coated optical fiber and the end of the wave guide upon which the microwaves from the wave guide radiate is set to be less than 5 mm, the signal, which indicates the characteristic value of the loss in the reflection of the microwaves, this being indicative of the coating quality of the carbon coating, does not become identical to noise as occurs in conventional methods for evaluating carbon coatings. When there is a variation in the coating quality of the carbon coating, the difference between the detected values of the variation in the reflection characteristics of the microwaves becomes large and the quality of the coating may be easily ascertained, thereby making it a simple matter to evaluate the coating quality of the carbon coating. Because of this beneficial feature, the reliability of the evaluation results of the coating quality of a carbon coating obtained using the evaluation method of the present invention is increased, and, moreover, the evaluation method of the present invention is particularly effective in measuring a carbon coated optical fiber for which the coating quality of the carbon coating is sub-standard.

Moreover, in the method of production of a carbon coated optical fiber according to the present invention, an optical fiber which has been melt spun in a fiber spinning furnace traverses through a CVD reaction furnace positioned in the lower part of the fiber spinning furnace. Within the reaction furnace, a carbon coating is formed about the surface of the optical fiber using the chemical vapor deposition method, thereby obtaining the carbon coated optical fiber. Next, the carbon coated optical fiber is inserted into the wave guide which is positioned in the lower part of the CVD reaction furnace. Because the coating quality of the carbon coating which extends along the length of the surface of the carbon coated optical fiber is evaluated by the carbon coating evaluation method of the present invention, the hydrogen resistance of the carbon coated optical fiber manufactured utilizing this production method is more reliable than that of carbon coated optical fibers manufactured utilizing a conventional carbon coating evaluation method.

Furthermore, because the carbon coated optical fiber, about the surface of which a carbon coating has been formed, is inserted into a wave guide and the coating quality of the carbon coating is measured using the carbon coating evaluation method of the present invention, there is no scattering generated in the values detected for the variation in microwave reflection loss, even for a carbon coated optical fiber for which the carbon coating formed has almost identical characteristics. The evaluation of the carbon coating can therefore be carried out with certainty. Additionally, because the carbon coated optical fiber of the present invention has a carbon coating for which the variation in the microwave reflection loss is 0.75dB or greater, it possesses a particularly superior resistance to hydrogen, the proportion of sub-standard products produced is small, and the productivity when manufacturing a carbon coated conductor is improved. Additionally, these qualities are particularly evident when the carbon coated optical fiber of the present invention is utilized in an underwater cable, which requires a superior resistance to hydrogen, or in a complex arial-earth connection, or the like.

### Brief Description of the Drawings

Fig. 1 is a cross sectional view extending in the direction of the wave guide of the microwave of the evaluation device utilized in the present invention;
Fig. 2 is a top face view showing the wave guide of the evaluation device utilized in the present invention;
Fig. 3 is a graph showing the relationship between the frequency of the microwave and the variation in the loss in wave reflection of the microwave;
Fig. 4 is a graph showing the relationship between the variation in the loss in wave reflection of the microwave and the distance between the carbon coated optical fiber and the end of the wave guide upon which the microwave radiates;
Fig. 5 is a graph showing the relationship between the diameter of the optical fiber passage aperture and the variation in the loss in wave reflection of the microwave;
Fig. 6 is a graph showing the relationship between the variation in the loss of transmission of light and the variation in the loss in wave reflection of the microwave;
Fig. 7 is a cross sectional view seen along the microwave wave guide direction of the evaluation device utilized in the conventional method for evaluating the carbon coating of an optical fiber; and
Fig. 8 is a cross sectional diagram, showing vertically the microwave wave guide direction of the wave guide of the evaluation device shown in Fig. 7.

### A Detailed Description of the Present Invention

A detailed description of the present invention based on the figures follows below.

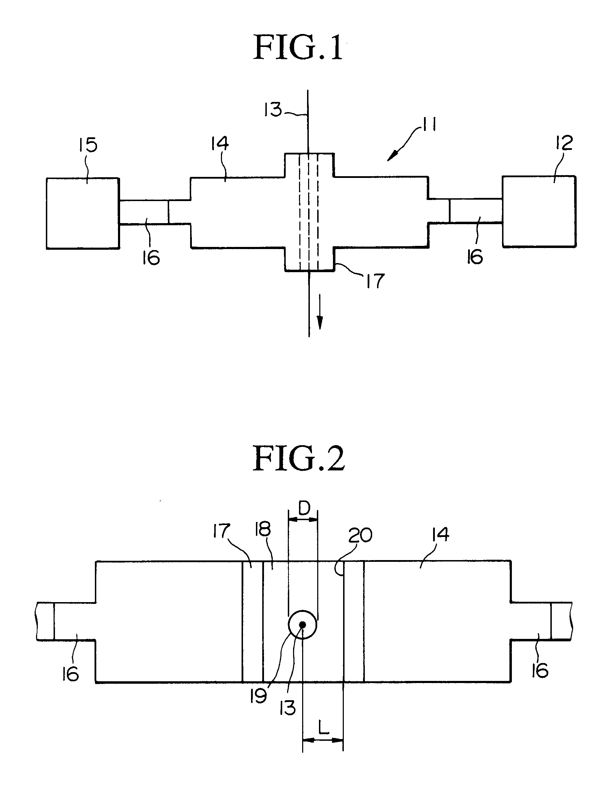

An evaluation of the coating quality of the carbon coating of a carbon coated optical fiber which is formed by carbon coating the outer surface of an optical fiber is carried out utilizing an evaluation device such as the type shown in Fig. 1.

Evaluation device 11 is provided in the lower portion of a CVD reaction furnace (not shown in the figure) by which the carbon coating is formed on the surface of the optical fiber, and is utilized as a microwave transmitting device. Evaluation device 11 comprises oscillating device 12, which oscillates the microwaves, wave guide 14, which guides fixed length microwaves which has been oscillated from oscillating device 12 and which irradiates a carbon coated optical fiber with these microwaves, detecting device 15 which detects the microwaves which have been guided through wave guide 14 and from this detected value measures the coating quality of the carbon coating on the surface of the carbon coated optical fiber, and coaxial cables 16,16 which connect oscillating device 12 and detecting device 15 to either end of wave guide 14.

Fig. 2 is a top face view of the wave guide 14 shown in Fig. 1. Wave guide 14 is equipped with a flange 17 and with a spacer 18, spacer 18 being formed from a metal such as aluminum and being provided on the inner side of flange 17.

Optical fiber passage aperture 19 for the insertion and guiding of carbon coated optical fiber 13 through wave guide 14 is formed in spacer 18.

Optical fiber passage aperture 19 is a through hole formed in spacer 18 so that the direction of movement of the carbon coated optical fiber 13 inserted in the center of optical fiber guidance aperture 19 is vertical with respect to the direction in which the microwaves are guided, and is further formed so that carbon coated optical fiber 13 is insertable through the center of optical fiber passage aperture 19.

Additionally, in Fig. 2, symbol D indicates the diameter of the optical fiber passage aperture 19, symbol 20 indicates the end surface of wave guide 14 upon which the microwave radiates, and symbol L indicates the distance between the surface 20 upon which the microwave radiates and carbon coated optical fiber 13.

Utilizing the evaluation device 11 shown in Fig. 1, the optimal conditions for the carbon coating evaluation method were obtained. To begin with, carbon coated optical fiber 13 was inserted into optical fiber passage aperture 19 and was guided within wave guide 14. Carbon coated optical fiber 13 was irradiated with microwaves of differing frequencies, the relationship between the frequency and the variation in the reflected wave loss of the microwave was investigated, and an evaluation was carried out on the preferable limits for the frequency of the microwaves.

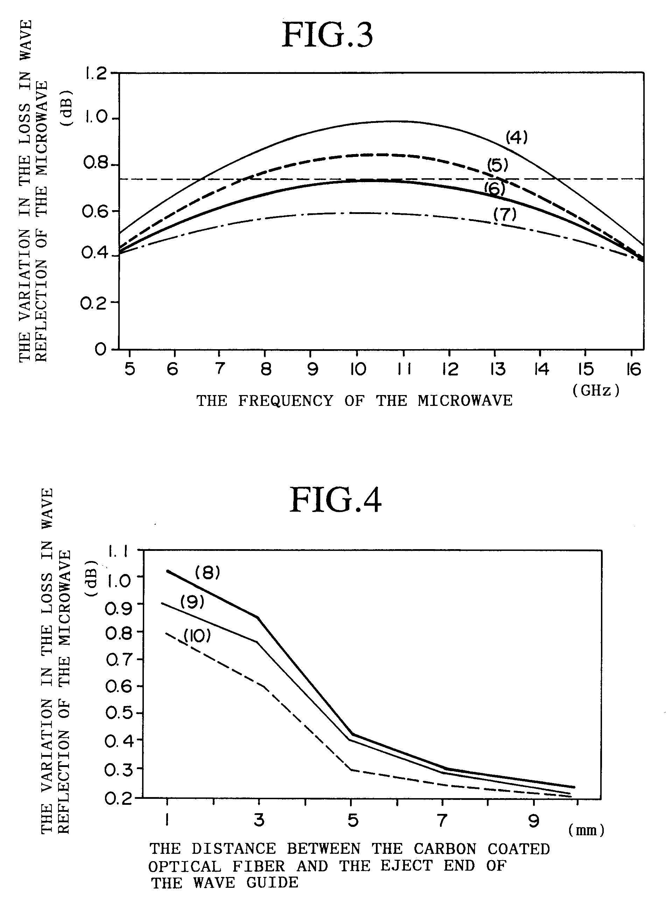

In Fig. 3, curved line (4) indicates carbon coated optical fiber (A); curved line (5) indicates carbon coated optical fiber (B); curved line (6) indicates carbon coated optical fiber (D) the increase in transmission loss of which was 5 dB/km at 1.24µm following maintenance in an environment comprising 1 atmospheric pressure of hydrogen and the coating quality of the carbon coating of which is sub-standard; curved line (7) indicates carbon coated optical fiber (E) the increase in transmission loss of which was 4.3 dB/km at 1.24µm following maintenance in an environment comprising 1 atmospheric pressure of hydrogen and having a coating quality which is even more sub-standard than that of carbon coated optical fiber (D).

In the results shown in Fig. 3, for the carbon coated optical fibers shown by curved lines (4) through (7), the variation in the reflected wave loss of the microwaves is large within the frequency range of the 7 to 15 GHz for the irradiated microwaves, and accordingly it is possible to prevent this variation from entering within noise limits. Moreover, when the microwave frequency is 8 GHz, the variation in the reflected wave loss of the detected microwave is approximately 0.85 dB for carbon coated optical fiber (A) shown by curved line (4), approximately 0.72 dB for carbon coated optical fiber (B) shown by curved line (5), approximately 0.65 dB for carbon coated optical fiber (D) shown by curved line (6), and approximately 0.4 dB for carbon coated optical fiber (E) shown by curved line (7). For this reason, when the coating quality of the carbon coating varies, the difference in the detected value of the variation in the reflected wave loss of the microwaves becomes greater, and the evaluation of the coating quality of the carbon coating can be easily detected by detection device 15. Moreover, even when the frequency of the microwaves is 12 GHz, because, in the same manner as when the frequency of the microwaves is 8 GHz, the difference in the detected value of the variation in the reflected wave loss of the microwave is greater, the coating quality of the carbon coating is easily evaluated by detection device 15.

In comparison, when the frequency of the microwaves is less than 7 GHz, the variation in the reflected wave loss of the microwave is less than approximately 0.8 dB in the carbon coated optical fiber (A) shown by curved line (4), less than approximately 0.7 dB in the carbon coated optical fiber (B) shown by curved line (5), less than approximately 0.6 dB in the carbon coated optical fiber (D) shown by curved line (6), and less than approximately 0.4 dB in the carbon coated optical fiber (E) shown by curved line (7). When the coating quality of the carbon coating varies, and in particular in carbon coated optical fiber (E) shown by curved line (7) where the variation in the reflected wave loss of the microwave is extremely small, the variation enters within the noise limits. Moreover, for the carbon coated optical fibers shown by curved lines (4) through (6), regardless of the difference in the coating quality, there is almost no difference between the detected values of variation in the reflected wave loss of the microwaves which is detected by detection device 15 when the microwave frequency is within the range of less than 6 GHz, making the evaluation of the coating quality of the carbon coating from this detected value difficult. Moreover, when the microwave frequency is larger than 15 GHz, because there is scattering in the variation of the reflected wave loss of the microwaves detected by detection device 15, the evaluation of the coating quality of the carbon coating from this detected value is difficult, even for the same carbon coated optical fiber.

From the above results, the preferable limits for the microwave frequency are within the range of 7 to 15 GHz, more preferably within the range of 8 to 12 GHz, and most preferably are 8 or 12 GHz.

Next, the relationship between the variation in the reflected wave loss of the microwaves and the distance L between the end 20 of wave guide 14 upon which the microwaves are radiated and carbon coated optical fiber 13 was investigated and an evaluation of the optimal limits for the distance L between end 20 of wave guide 14 upon which the microwaves are inflected and carbon coated optical fiber 13 was carried out. These results are shown in Fig. 4.

In Fig. 4, curved line (8) indicates carbon coated optical fiber (A), curved line (9) indicates carbon coated optical fiber (B), curved line (10) indicates carbon coated optical fiber (C), the coating quality of the carbon coating of which is sub-standard.

From the results shown in Fig. 4, when the distance L between the end surface 20 of wave guide 14 upon which the microwave is radiated and carbon coated optical fiber 13 is less than 5 mm, the variation in the reflected wave loss of the microwave which is detected by detection device 15 is approximately 0.45 dB or greater in carbon coated optical fiber (A) shown by curved line (8), approximately 0.42 dB or greater in carbon coated optical fiber (B) shown by curved line (9), and approximately 0.3 dB or greater in carbon coated optical fiber (C) shown by curved line (10). Because these values are large, it is possible to prevent the variation in these from entering with the limits of noise. When the coating quality of the carbon coating varies, because the difference in the values detected for the variation in the reflected wave loss of the microwaves is large, the evaluation of the coating quality of the carbon coating is easily performed. Furthermore, when the distance L between the end 20 of wave guide 14 upon which the microwaves are radiated and carbon coated optical fiber 13 is less than 3 mm, when the coating quality of the carbon coating varies, because the difference in the detected value of the variation of the reflected wave loss of the microwave is large, the evaluation of the coating quality of the carbon coating is performed extremely easily.

In comparison, when the distance L between the end 20 of wave guide 14 upon which the microwave is radiated and carbon coated optical fiber 13 is longer than 5 mm, the variation in the reflected wave loss of the microwaves is approximately 0.45 dB or less in carbon coated optical fiber (A) shown by curved line (8), approximately 0.42 dB or less in carbon coated optical fiber (B) shown by curved line (9), and approximately 0.3 dB or less in carbon coated optical fiber (C) shown by curved line (10). When the coating quality of the carbon coating varies, because the variation in the reflected wave loss of the microwaves enters within noise limits, in particular for the carbon coated optical fiber (C) shown by curved line (10), the values output for the variation in the reflected wave loss of the microwaves are not reliable.

According to the above results, the permissible limits for the distance L between the carbon coated optical fiber and the end 20 of the wave guide upon which the microwaves incident are preferably below 5 mm, and even more preferably below 3 mm.

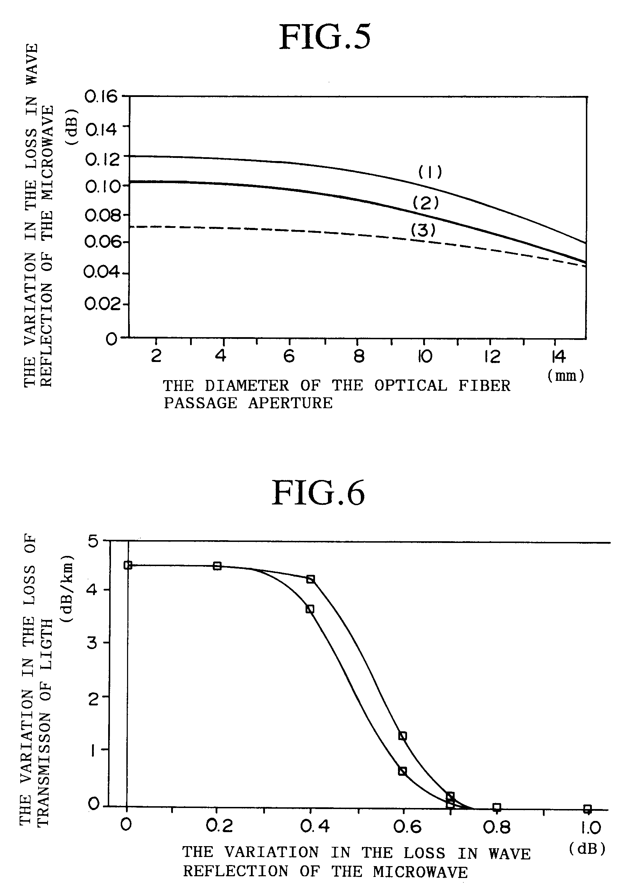

Next, utilizing the evaluation device 11 shown in Fig. 1, the relationship between the diameter D of optical fiber passage aperture 19 and the variation in the reflected wave loss of the microwaves was investigated and the preferable limits for the size of diameter D of optical fiber passage 19 were evaluated. These results are shown in Fig. 5.

In Fig. 5, curved line (1) indicates carbon coated optical fiber (A), for which the increase in transmission loss at a wave length of 1.24µm following maintenance for 24 hours in an environment comprising 1 atmospheric pressure of hydrogen was 0 dB/km; curved line (2) indicates carbon coated optical fiber (B), for which the increase in transmission loss at a wave length of 1.24µm following maintenance for 24 hours in an environment comprising 1 atmospheric pressure of hydrogen was 0.1 dB/km, this currently being the quality standard for the coating quality of a carbon coating; curved line (3) indicates carbon coated optical fiber (C), for which the increase in transmission loss at a wave length of 1.24µm following maintenance for 24 hours in an environment comprising 1 atmospheric pressure of hydrogen was 1.0 dB/km, the coating quality of the carbon coating of carbon coated optical fiber (C) being sub-standard.

From the results shown in Fig. 5, when diameter D of the optical fiber passage aperture 19 is below 8 mm, the variation in reflected wave loss of the microwaves which are detected by detection device 15 is approximately 0.11 dB or more in carbon coated optical fiber (A) shown by curved line (1), is about 0.09 dB or more in carbon coated optical fiber (B) shown by curved line (2), and is about 0.065 dB or more in carbon coated optical fiber (C) shown by curved line (3). Because these are large values, it is possible to prevent the variation in these from entering within the limits for noise, and when there is a variation in the coating quality of the carbon coating, the difference in the detected values of the variation in the reflected wave loss of the microwave is large and the evaluation of the quality of the carbon coating becomes a simple matter. Furthermore, at a diameter D of approximately 6 mm and in the range of 5 to 7 mm for optical fiber passage aperture 19, when the coating quality of the carbon coating varies, the difference in the detected value of the variation in the reflected wave loss of the microwaves becomes even greater, and the evaluation of the coating quality of the carbon coating becomes an easy matter.

In comparison, when the diameter D of the optical fiber passage aperture 19 is larger than 8 mm, the variation in the reflected wave loss in the microwaves is less than approximately 0.11 dB in the carbon coated optical fiber (A) shown by curved line (1), less than approximately 0.09 dB in the carbon coated optical fiber (B) shown in curved line (2), and less than approximately 0.065 dB in the carbon coated optical fiber (C) shown in curved line (3). When there is a variation in the coating quality of the carbon, because the variation in the reflected wave loss of the microwave enters within the noise limits, particularly for the carbon coated optical fiber (C) shown by curved line (3), the value which is output for the variation in the reflected wave loss of the microwave is not reliable.

Furthermore, if the diameter D of optical fiber passage aperture 19 is too small, through ray deflection, etc., carbon coated optical fiber 13 comes into contact with optical fiber passage aperture 19 when inserted into optical fiber passage aperture 19. Because of the possibility of damage to the carbon coated surface arising from this, 4 mm is set as the lower limit for the diameter of optical fiber passage aperture 19.

According to the above results of evaluation, a range of between 4 to 8 mm contains the optimal limits for diameter D of optical fiber passage aperture 19 of wave guide 14, with this range being preferably 5 to 7 mm, and, even more preferably, 6 mm.

From the evaluated results, the preferable evaluation conditions in a method wherein a carbon coated optical fiber is guided through a wave guide and irradiated with microwaves, and an evaluation of the coating quality of the carbon coating is made from the variation in the reflection characteristics of the microwaves, are a diameter D within the range of 4 to 8 mm, preferably 5 to 7 mm, and most preferably 6 mm for optical fiber passage aperture 19 of wave guide 15, a microwave frequency within the range of 7 to 15 GHz, preferably 8 to 12 GHz and most preferably 8 GHz or 12 GHz, and a distance L of preferably less than 5 mm, and even more preferably less than 3 mm, for the distance between the carbon coated optical fiber 13 and the end 20 of wave guide 14 upon which the microwaves radiate. Given these evaluation standards, it is possible to provide a carbon coating evaluation method for which the results of an evaluation of a carbon coating are highly reliable.

Next, using Figs. 1 and 2, an explanation will be offered of a method of production of a carbon coated optical fiber using a carbon coating evaluation method wherein the diameter of the optical fiber passage aperture 19 of wave guide 14 is set within the limits of 4 to 8 mm, the microwave frequency is set within the limits of 7 to 15 GHz and the distance L between the carbon coated optical fiber and the end 20 of wave guide 14 upon which the microwave incidents is set to be less than 5 mm.

First, an optical fiber which has been melt spun in a fiber spinning furnace (omitted from the figure) is moved through a CVD reaction furnace (omitted from the figures) which is provided in the lower portion of the fiber spinning furnace, a carbon coating is formed about the surface of the optical fiber by the chemical vapor deposition method, thereby obtaining the carbon coated optical fiber 13. Microwaves within the range of 7 to 15 GHz are oscillated from oscillating device 12 of evaluation device 11, and guided by coaxial cable 16 within wave guide 14 which is positioned at the base of the CVD reaction furnace.

Next, carbon coated optical fiber 13 is inserted into optical fiber passage aperture 19 of wave guide 14 so as to be vertical with respect to the direction of guidance of the microwaves oscillated from oscillating device 12. Carbon coated optical fiber 13 is then microwave irradiated. A portion of the microwaves which irradiate carbon coated optical fiber 13 are absorbed by the carbon coating while the remainder are guided through wave guide 14 towards detection device 15. Detection device 15 detects the oscillation intensity of these remaining microwaves.

The oscillation intensity of the microwaves which were oscillated by oscillating device 12 is then compared to the intensity of the microwaves which were detected by detecting device 15, and the carbon coated optical fiber is produced while an evaluation of the quality of the carbon coating which extends along the length of the surface of the carbon coated optical fiber 13 inserted into wave guide 14 is performed.

Carbon coated optical fiber 13 may then be inserted through a coating die (omitted from the figures) which is filled with a resinous coating liquid, and a resinous liquid, or the like, which will undergo hardening under exposure to ultraviolet light, may be applied to the surface of carbon coated optical fiber 13 as is necessary. Carbon coated optical fiber 13 can then be place within a hardening device (omitted from the figures) where the above-mentioned resinous liquid is hardened under exposure to ultraviolet rays, thereby forming a resinous coating layer about the surface of carbon coated optical fiber 13.

In the above production method for carbon coated optical fibers, the variation in the microwave reflection characteristics of the carbon coated optical fiber about which is formed a carbon coating having excellent hydrogen resistance capabilities is checked utilizing the aforementioned evaluation method, and the value detected at detection device 15 is relayed to the CVD reaction furnace as a control signal. Based on this control signal, for example, the heating temperature of the heating element which heats the reaction tube within the CVD reaction furnace, the concentration of the reducing gas supplied to the reaction tube, etc., is altered. By exercising such control, it becomes possible to manufacture carbon coated optical fibers having carbon coatings which possess uniform hydrogen resistance capabilities. The aforementioned control signal, because it is based on the value obtained by the carbon coating evaluation method of the present invention, is highly reliable. Likewise, the reliability of the hydrogen resistance of the obtained carbon coated optical fiber upon which the control received from this control signal has been exercised is considerable as when compared to that of carbon optical fibers obtained using the conventional carbon coating evaluation methods.

Next, utilizing the evaluation device shown in Fig. 1, the mutual relationship between the variation in the reflection loss of the microwaves and the hydrogen resistance of the carbon coated optical fiber was investigated under evaluation conditions wherein the diameter D of optical fiber passage aperture 19 of wave guide 14 was set within the limits of 4 to 8 mm, the microwave frequency was set within the limits of 7 to 15 GHz, and the distance L between carbon coated optical fiber 13 and end 20 of wave guide 14 upon which the microwaves radiate was fixed at less than 5 mm. The results of this investigation are shown in Fig. 6. As a point of note, it is known that the hydrogen resistance of a carbon coated optical fiber can be evaluated based on the extent of transmission loss in the carbon coated fiber, and that the smaller this transmission loss is, the more superior is the resistance of the carbon coated optical fiber to hydrogen.

In Fig. 6, the curved line indicates the mutual relationship between the transmission loss (dB/km) of the carbon coated optical fiber after transmission of 1.24µm of light and the variation in the reflection loss of the microwaves (dB), following maintenance of the carbon coated optical fiber for 24 hours in an environment comprising one atmospheric pressure of hydrogen.

It can be seen from the results shown in Fig. 6 that, when the variation in the reflection loss of the microwaves which irradiate the carbon coated optical fiber is below 0.2 dB, the transmission loss is approximately 4.5 dB/km. However, because the current quality standard for the hydrogen resistance of carbon coated optical fibers is 0.1 dB/km, the hydrogen resistance of the aforementioned carbon coated optical fiber having a transmission loss of approximately 4.5 dB/km is rather inferior. Moreover, when the variation in the reflection loss in the microwave is greater than 0.2 dB, but less than 0.75 dB, even if the value of the variation in the reflected loss of the microwaves is the same, scattering in generated in the value of the transmission loss and the hydrogen resistance of the carbon coated optical fiber cannot be evaluated. On the other hand, when the variation in the reflection loss of the microwave is greater than 0.75 dB, there is no scattering generated in the values for transmission loss, and, moreover, because this value is 0 dB/km, the superiority of the hydrogen resistance of the carbon coated optical fiber is obvious.

According to the results of the above investigation, when detecting the variation in the reflection loss of the microwaves, it is preferable that the variation in the reflection loss of the microwaves be greater than 0.75 dB under evaluation conditions wherein the diameter D of optical fiber passage aperture 19 of wave guide 14 is set within the limits of 4 to 8 mm, the microwave frequency is set within the limits of 7 to 15 GHz, and the distance L between carbon coated optical fiber 13 and end 20 of the wave guide upon which the microwaves radiate is fixed at less than 5 mm.

Next, an example of the method for obtaining a carbon coated optical fiber having a carbon coating with a superior resistance to hydrogen will be explained.

First, 0.75 dB will be pre-set as a standard for the value of the variation of the reflection loss of the microwaves. Next, the control signal is relayed to the CVD reaction furnace so that the detection value of the variation of the reflection loss of the microwave under the preferable conditions as set forth above does not drop below the aforementioned standard. By altering such factors as the temperature of the heating element which heats the reaction tube of the CVD reaction furnace, the concentration of the raw gas supplied to the reaction tube, or the like based on this control signal, control is carried out so that a carbon coating having the desired resistance to hydrogen is formed. Following maintenance of the thus obtained carbon coated optical for 24 hours in an environment of one atmospheric pressure of hydrogen, the transmission loss (dB/km) after transmission of light of a 1.24µm wavelength was 0 dB/km. The thus obtained carbon coated optical fiber possesses a superior resistance to hydrogen as when compared to that of the carbon coated optical fibers of the prior art.

The carbon coating evaluation method of the present invention is a method carried out under optimal conditions wherein the diameter of an optical fiber passage aperture formed in a wave guide is set within the limits of 4 to 8 mm, the frequency of the microwaves is set within the limits of 7 to 15 GHz, and the distance between the carbon coated optical fiber and the end surface upon which the microwave radiates is fixed at less than 5 mm. Because the carbon coating evaluation method is carried out under such optimal conditions, it is possible to avoid the problem which arises in the carbon coating evaluation methods of the prior art, namely, it is possible to prevent the level of the signal, which shows the characteristic value of the reflection loss of the microwaves, this being indicative of the coating quality of the carbon coating, from becoming identical to noise. When there is a variation in the quality of the carbon coating, the difference in the detected values of the variations in the reflection characteristics of the microwaves becomes large and the quality of the coating becomes obvious, and, therefore,the evaluation of the coating quality of the carbon coating becomes an easy matter.

Moreover, in the carbon coated optical fiber production method of the present invention, an optical fiber which has been melt spun in a fiber spinning furnace is conveyed through a CVD reaction furnace situated at the bottom portion of the melt fiber spinning furnace. In the CVD reaction furnace, a carbon coating is formed about the surface of the optical fiber using the chemical vapor deposition method. Next, this carbon coated optical fiber is inserted into a wave guide provided at the bottom portion of the CVD reaction furnace, and an evaluation of the coating quality of the carbon coating extending along the length of the surface of the carbon coated optical fiber is carried out using the carbon coating evaluation method of the present invention. Accordingly, the hydrogen resistance of the carbon coated optical fiber manufactured using this production method is more reliable than that of carbon coated optical fibers manufactured utilizing conventional carbon coating evaluation methods.

Furthermore, because the carbon coated optical fiber of the present invention, formed by forming a carbon coating about the surface of an optical fiber, is inserted in a wave guide and the coating quality of the carbon coating is measured using the carbon coating evaluation method of the present invention, there is no scattering generated in the detected value of the variation in the reflection loss of the microwaves, even in carbon coated optical fibers for which the characteristics of the carbon coating formed are almost identical. The evaluation of the carbon coating can therefore be carried out with assurance. Moreover, because the carbon coated optical fiber of the present invention has a carbon coating for which the variation in the reflection loss of the microwave is greater than 0.75 dB, it possesses a consistently superior resistance to hydrogen.

## Claims

1. An apparatus for evaluating the quality of a carbon coating applied about the surface of an optical fiber, the apparatus comprising:
oscillator means (12) for delivering microwaves; a measuring device (15) for measuring the microwaves; and means (14) for guiding the microwaves delivered by the oscillating means to the optical fiber for irradiation of the optical fiber (13) and for further guiding the propagated microwaves to the measuring device; characterized in that the oscillator means deliver microwaves in a frequency range of 7 to 15 GHz and a spacer having an aperture of a diameter of 5 to 7 mm is provided for insertion of the optical fiber, the spacer defining the positioning of the optical fiber at a distance of 5 mm or less from an end of the guiding means (14).

2. A carbon coating evaluation method for evaluating the quality of a carbon coating applied about the surface of an optical fiber, the method comprising the steps of:
a) guiding the optical fiber through an optical fiber passage aperture of a wave guide, the optical fiber passage aperture having a diameter within the limits of 4 to 8 mm;
b) irradiating the optical fiber at a distance of 5 mm or less from the end of the wave guide with microwaves having a frequency within the limits of 7 to 15 GHz;
c) measuring the microwaves propagated through the optical fiber; and,
d) evaluating the coating quality of the carbon coating from the variation in the characteristics of the measured microwaves.

3. A carbon coating evaluation method according to claim 2 wherein the fiber passage aperture has a diameter within the limits of 5 to 7 mm.

4. A carbon coating evaluation method according to claim 2 wherein the the microwaves have a frequency within the limits of 8 to 12 GHz.

5. A carbon coating evaluation method according to claim 2 wherein the distance between the optical fiber and the end of the wave guide is less than 3 mm.

6. A carbon coating evaluation method according to claim 2 wherein the diameter of the optical fiber passage aperture is 6 mm, the frequency of the microwaves is 8 GHz and the distance between the optical fiber and the end of the wave guide is 3 mm or less.

7. A carbon coating evaluation method according to claim 2 wherein the diameter of the optical fiber passage aperture is 6 mm, the frequency of the microwaves is 12 GHz and the distance between the optical fiber and the end of the wave guide is 3 mm or less.

8. A method of production for a carbon coated optical fiber comprising:
a) conveying an optical fiber melt spun in a fiber spinning furnace through a chemical vapor deposition reaction furnace;
b) obtaining a carbon coated optical fiber by forming a carbon coating about the surface of the optical fiber using the chemical vapor deposition method; and
c) evaluating the coating quality of the carbon coating by using the carbon coating evaluation method according to one of claims 2 through 7.

9. A method of production for a carbon coated optical fiber according to claim 8 wherein the results of the evaluation are utilized to regulate conditions under which the carbon coating is formed.

10. A carbon coated optical fiber having a carbon coating in which the variation of the microwave reflection loss is 0.75 dB or more in the measurement of the coating quality of the carbon coating utilizing the carbon coating evaluation method according to one of claims 2, 3, 4, 5, 6, and 7.
